# EUROPEAN PATENT SPECIFICATION

(11) **EP 4 580 386 B1**
(45) Date of publication and mention of the grant of the patent: **10.06.2026**
(21) Application number: 23776176.2
(22) Date of filing: 30.08.2023
(51) Int. Cl.: A01D 61/00, A01D 61/02

(54) **AGRICULTURAL HEADER WITH A DRAPER BELT AND A SEAL COUPLED TO A ROLLER MOUNT**
LANDWIRTSCHAFTLICHER ERNTEVORSATZ MIT EINEM FÖRDERBAND UND EINER DICHTUNG, DIE MIT EINER ROLLENHALTERUNG VERBUNDEN SIND
TÊTE DE RÉCOLTE AGRICOLE AVEC UN CONVOYEUR À TAPIS ET UN JOINT D'ÉTANCHÉITÉ COUPLÉS À UN SUPPORT DE ROULEAU

(30) Priority: 30.08.2022 US 202263402312 P
(43) Date of publication of application: 09.07.2025
(73) Proprietor: CNH Industrial America LLC, New Holland, PA 17557 (US)
(72) Inventor: THOMAS, Jeffrey D., New Holland, Pennsylvania 17557 (US); WOELFLING, Joseph, New Holland, Pennsylvania 17557 (US)
(74) Representative: CNH Industrial IP Department
(86) International application number: PCT/US2023/031490
(87) International publication number: WO 2024/049872

(56) References cited:
- EP-B1- 3 516 941
- US-A1- 2009 320 431
- US-A1- 2021 120 741
- US-A1- 2022 240 449

## Description

### BACKGROUND OF THE INVENTION

An agricultural harvester known as a "combine" is historically termed such because it combines multiple harvesting functions with a single harvesting unit, such as picking, threshing, separating, and cleaning. A combine includes a header which removes the crop from a field, and a feeder housing which transports the crop matter into a threshing rotor. The threshing rotor rotates within a perforated housing, which may be in the form of adjustable concaves, and performs a threshing operation on the crop to remove the grain. Once the grain is threshed it falls through perforations in the concaves onto a grain pan. From the grain pan the grain is cleaned using a cleaning system, and is then transported to a grain tank onboard the combine. A cleaning fan blows air through the sieves to discharge chaff and other debris toward the rear of the combine. Non-grain crop material such as straw from the threshing section proceeds through a residue handling system, which may utilize a straw chopper to process the non-grain material and direct it out the rear of the combine. When the grain tank becomes full, the combine is positioned adjacent a vehicle into which the grain is to be unloaded, such as a semi-trailer, gravity box, straight truck, or the like, and an unloading system on the combine is actuated to transfer the grain into the vehicle.

More particularly, a rotary threshing or separating system includes one or more rotors that can extend axially (front to rear) or transversely (side to side) within the body of the combine, and which are partially or fully surrounded by perforated concaves. The crop material is threshed and separated by the rotation of the rotor within the concaves. Coarser non-grain crop material such as stalks and leaves pass through a straw beater to remove any remaining grains, and then are transported to the rear of the combine and discharged back to the field. The separated grain, together with some finer non-grain crop material such as chaff, dust, straw, and other crop residue are discharged through the concaves and fall onto a grain pan where they are transported to a cleaning system. Alternatively, the grain and finer non-grain crop material may also fall directly onto the cleaning system itself.

A cleaning system further separates the grain from non-grain crop material, and typically includes a fan directing an airflow stream upwardly and rearwardly through vertically arranged sieves which oscillate in a fore and aft manner. The airflow stream lifts and carries the lighter non-grain crop material towards the rear end of the combine for discharge to the field. Clean grain, being heavier, and larger pieces of non-grain crop material, which are not carried away by the airflow stream, fall onto a surface of an upper sieve (also known as a chaffer sieve), where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material which passes through the upper sieve, but does not pass through the lower sieve, is directed to a tailings pan. Grain falling through the lower sieve lands on a bottom pan of the cleaning system, where it is conveyed forwardly toward a clean grain auger. The clean grain auger conveys the grain to a grain elevator, which transports the grain upwards to a grain tank for temporary storage. The grain accumulates to the point where the grain tank is full and is discharged to an adjacent vehicle such as a semi trailer, gravity box, straight truck or the like by an unloading system on the combine that is actuated to transfer grain into the vehicle.

One style of header that is known is referred to as a draper header and includes a pair of draper belts for conveying cut crop material towards a center of the header before being fed into the feeder housing. Each draper belt is driven by one or more rollers that rotate to drive the draper belts. The rollers also hold the draper belts taut to avoid issues associated with the draper belts sagging. The rollers may be adjustable relative to the frame of the header, *e.g.,* to improve tracking of the associated draper belt. One particular issue with adjusting the rollers is that the adjustment can be a time-consuming process for various reasons. US 2021/0120741 describes an adjusting device for adjusting a tension of the conveyor belt in a header of a combine harvester.

What is needed in the art is an agricultural header that addresses some of the previously described issues with known agricultural headers.

### SUMMARY OF THE INVENTION

Exemplary embodiments provided according to the present disclosure include an agricultural header with a draper belt assembly having a roller mount that couples a roller to a header frame and a seal is coupled to the roller mount such that adjustment of the roller mount causes a corresponding adjustment of both the roller and the seal.

In some exemplary embodiments provided according to the present disclosure, an agricultural header for an agricultural vehicle includes: a header frame; at least one cutter carried by the header frame and configured to cut crop material; and a draper belt assembly carried by the header frame. The draper belt assembly includes: a roller supported by the header frame; a draper belt wrapped around the roller such that rotation of the roller drives the draper belt; a roller mount coupling the roller to the header frame; and a seal coupled to the roller mount such that adjustment of the roller mount causes a corresponding adjustment of both the roller and the seal.

In some exemplary embodiments provided according to the present disclosure, an agricultural vehicle includes a chassis and a header carried by the chassis. The header includes: a header frame; at least one cutter carried by the header frame and configured to cut crop material; and a draper belt assembly carried by the header frame. The draper belt assembly includes: a roller supported by the header frame; a draper belt wrapped around the roller such that rotation of the roller drives the draper belt; a roller mount coupling the roller to the header frame; and a seal coupled to the roller mount such that adjustment of the roller mount causes a corresponding adjustment of both the roller and the seal.

In some exemplary embodiments provided according to the present disclosure, a method of adjusting a roller and a draper belt of an agricultural header including a header frame and at least one cutter carried by the header frame and configured to cut crop material is provided. The method includes: wrapping the draper belt around the roller such that rotation of the roller drives the draper belt; coupling the roller to the header frame with a roller mount, the roller mount having a seal coupled thereto; and adjusting a position of the roller mount relative to the header frame. Adjusting the position of the roller mount also adjusts a corresponding position of both the roller and the seal.

One possible advantage that may be realized by exemplary embodiments provided according to the present disclosure is that coupling the seal to the roller mount reduces the time it takes to adjust the roller because the seal does not need to be adjusted separately.

Another possible advantage that may be realized by exemplary embodiments provided according to the present disclosure is that the roller and the seal can be easily maintained in a constant relationship during adjustment.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates a top view of an exemplary embodiment of an agricultural vehicle, the agricultural vehicle comprising a header, in accordance with an exemplary embodiment of the present disclosure;
FIG. 2 illustrates a perspective view of a draper assembly of the header of FIG. 1 provided according to the present disclosure;
FIG. 3 illustrates another perspective view of the draper assembly illustrated in FIG. 2;
FIG. 4 illustrates a side view of the draper assembly illustrated in FIGS. 2-3; and
FIG. 5 is a flow chart illustrating an exemplary embodiment of a method of adjusting a roller and a draper belt of an agricultural header, provided in accordance with the present disclosure.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also, the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting. The terms "downstream" and "upstream" are determined with reference to the intended direction of crop material flow during operation, with "downstream" being analogous to "rearward" and "upstream" being analogous to "forward."

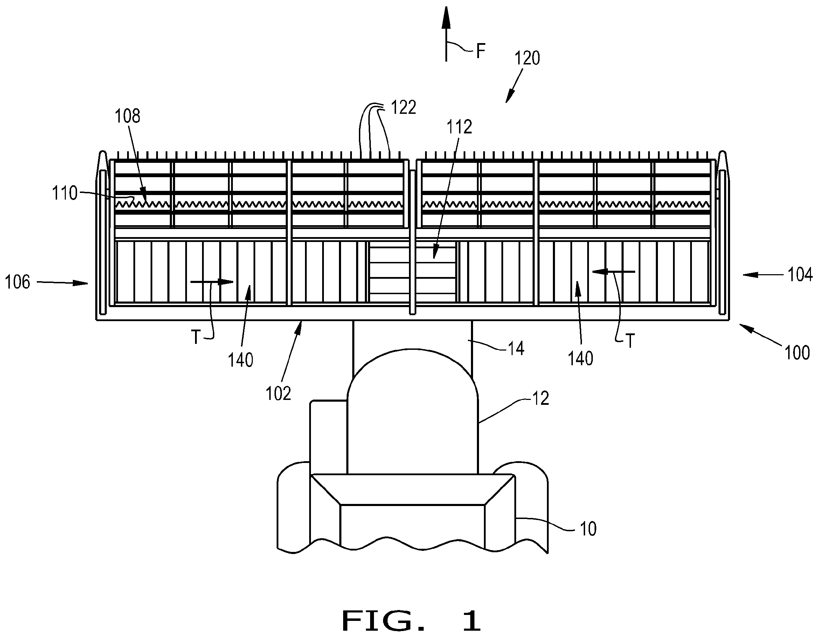

Referring now to the drawings, and more particularly to FIG. 1, there is shown an exemplary embodiment of an agricultural vehicle 10 in the form of a combine harvester which generally includes a chassis 12, a feeder housing 14, and an attachment in the form of a header 100. Typically, the combine harvester 10 will include additional internal systems for the separation and handling of collected crop material, but these additional systems are omitted from view for brevity of description. It should be appreciated that the header 100 described and illustrated herein does not necessarily need to be included on combine harvesters, but can be incorporated in other agricultural vehicles such as windrowers. It should be further appreciated that while the header 100 is shown and described as being configured for harvesting fluffy crops, such as wheat, in some embodiments the header is configured for harvesting other crops, such as corn.

The header 100 is coupled to the feeder housing 14 and supported by the chassis 12 of the agricultural vehicle 10. The header 100 has a header frame 102 and a pair of opposed lateral ends 104, 106. The header frame 102 supports one or more flexible cutters 108, shown as a cutter bar, with reciprocating cutting edges 110 to cut crop material as the agricultural vehicle 10 travels in a forward direction, denoted by arrow F. The header 100 may further include a center feed belt 112 or a center auger that conveys the crop material into the feeder housing 14. The header 100 includes one or more lateral, flexible draper belts 140 that are positioned rearwardly of the cutter bar(s) 108 and travel, i.e. rotate, in opposing directions of travel, denoted by each arrow "T", in order to convey the crop material inwardly to the center feed belt 112 and thereby the feeder housing 14. The vehicle 10 may further include a reel assembly 120 with tines 122 that rotate to direct crop material to the cutter(s) 108 of the header 100, as is known.

In known draper headers, the draper belts wrap around rollers, which rotate to drive the draper belts. The rollers may be adjustable in order to, for example, compensate for slack that has developed in the draper belt. Many draper belts include a seal, which may also be called an infeed seal, that reduces crop loss from the draper belts. The seal can also prevent plugs from occurring. One particular issue that arises when adjusting the roller, and the associated draper belt, is that the seal must also be adjusted in order to maintain its efficacy. Adjusting the roller requires not only adjusting the position of the roller but also adjusting the position of the seal; the seal may be ineffective if the seal is incorrectly adjusted and/or the seal may be in the way of adjusting the roller. Adjusting both the roller and the seal separately can thus require a significant amount of time and leave open the possibility of mispositioning one or both of the elements, which requires even more time to correct and may not be detected until the header is operating.

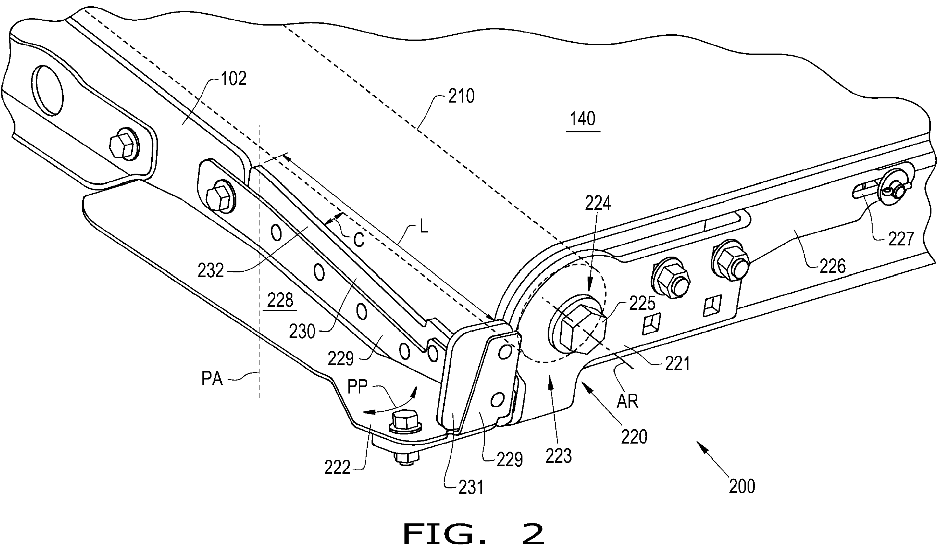

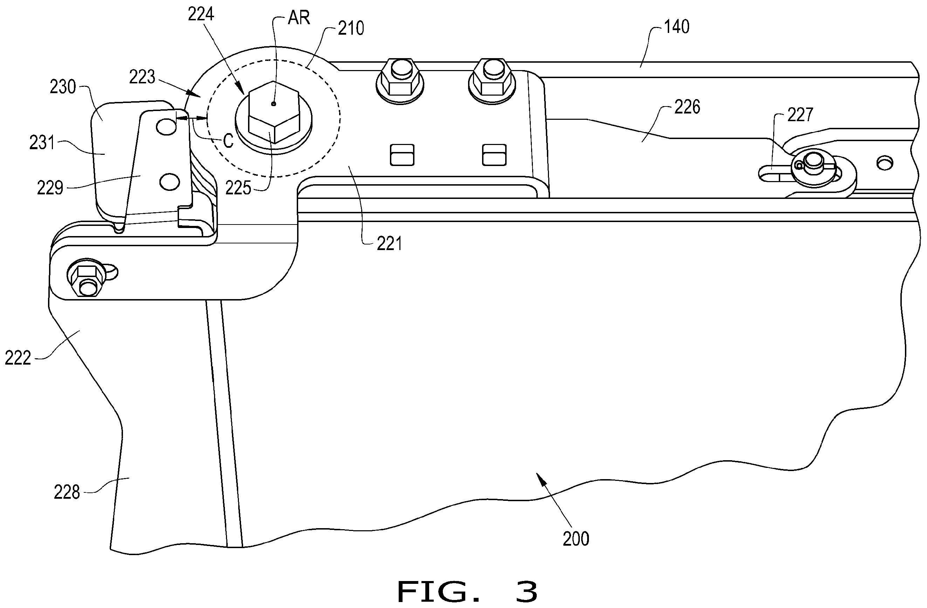

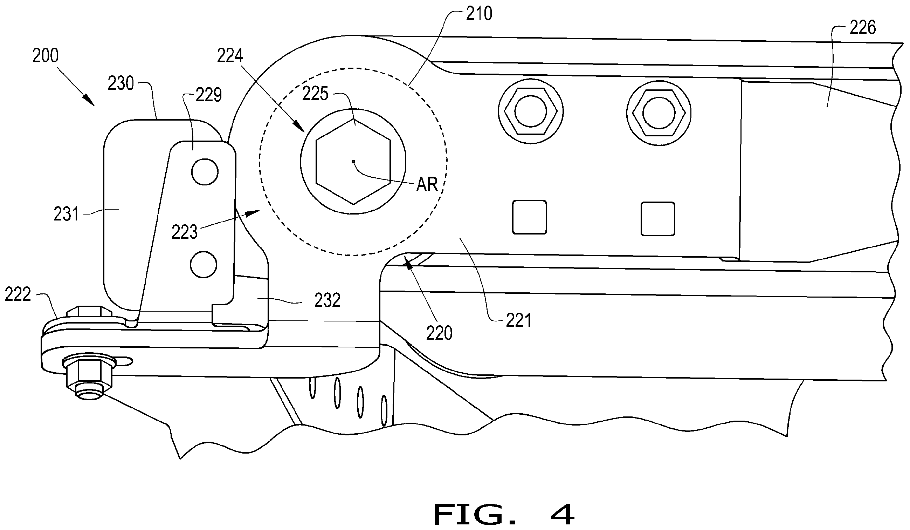

To address some of the previously described issues, and referring now to FIGS. 2-4, the header 100 provided according to the present disclosure includes a draper belt assembly 200 that is carried by the header frame 102 and includes a roller 210 supported by the header frame 102, the draper belt 140 being wrapped around the roller 210 such that rotation of the roller 210 drives the draper belt 140, a roller mount 220 coupling the roller 210 to the header frame 102, and a seal 230 coupled to the roller mount 220 such that adjustment of the roller mount causes a corresponding adjustment of both the roller 210 and the seal 230. Since both the roller 210 and the seal 230 are coupled to the roller mount 220, adjustment of the roller 210 by adjusting the roller mount 220 also causes adjustment of the seal 230. Thus, the roller 210 and the seal 230 can be easily adjusted simply by adjusting the roller mount 220. It should be appreciated that while only one roller mount 220 and seal 230 are illustrated in FIGS. 2-4, another roller mount 220 and seal 230 that are similar, if not identical, may be coupled to the roller 210 at an opposite end.

The roller mount 220 may be provided in a variety of configurations. In the illustrated embodiment, the roller mount 220 includes a roller coupling portion 221 that is coupled to the roller 210 and a floor plate 222 that is coupled to the roller coupling portion 221 and the header frame 102. The roller coupling portion 221 may include a first section 223 that has a mounting area 224 to which the roller 210 is coupled, such as by a bolt 225 that journals into the roller 210 directly or via a bearing. A second section 226 may be coupled to the first section 223; as illustrated, the second section 226 and the first section 223 are integrally formed together. The second section 226 may be offset from the first section 223 and include an elongated slot 227, which can allow adjustment of the roller mount 220 and the corresponding adjustment of the roller 210 and the seal 230. To adjust the roller mount 220, as well as the roller 210 and the seal 230, the roller mount 220 may be moved so the elongated slot 227 slides along a pin, which may be coupled to a flex arm.

The floor plate 222 may, for example, include a first surface 228 that is generally parallel to a conveying surface of the draper belt 140 as well as second surfaces 229 that extend perpendicular to the first surface 228. The first surface 228 and/or the second surfaces 229 may be bolted to the header frame 102. In some embodiments, the first surface 228 is bolted to the roller coupling portion 221 and one or more of the second surfaces 229 is bolted to the header frame 102, as illustrated. The floor plate 222 may be adjusted, for example, by pivoting about a pivot axis PA so the floor plate pivots in a pivot path PP, as illustrated in FIG. 2.

As previously described, the seal 230 is coupled to the roller mount 220. The seal 230 may, for example, be coupled to the floor plate 222 by riveting. In some embodiments, the seal 230 comprises a polymer and/or rubber so the seal 230 is flexible. When coupled to the roller mount 220, the seal 230 may be located adjacent to the draper belt 140 without contacting the draper belt 140 so the seal 230 helps prevent crop material coming off the draper belt 140 while also not causing frictional wear on the draper belt 140. The seal 230 may be spaced from a lateral end of the draper belt 140 so the seal 230 is laterally outward of the draper belt 140. In some embodiments, the roller 210 defines an axis of rotation AR and the seal 230 defines a longest dimension, illustrated as a length L, that extends in parallel with the axis of rotation AR. The seal 230 may, for example, include a mounting section 231 that is coupled to one of the second surfaces 229 of the floor plate 222 and a sealing section 232 that extends parallel to the axis of rotation AR and, in some embodiments, is also coupled to one of the second surfaces 229.

As can be appreciated from FIGS. 2-4, the seal 230 defines a seal clearance C relative to the roller 210. In some embodiments, the seal 230 and the roller 210 are both coupled to the roller mount 220 in a fixed manner so the seal clearance C does not change during adjustment of the roller 210 and the seal 230, *i.e.,* by adjusting the position of the roller mount 220. Exemplary values for the seal clearance C include, but are not limited to, 6 mm to 8 mm, but it should be appreciated that the seal clearance C may be adjusted to account for different sizes and geometries in the relevant space. The seal 230 and the roller 210 can thus maintain a fixed positioning relative to one another so the seal 230 does not need to be independently adjusted during adjustment of the roller 210; both the roller 210 and the seal 230 can be adjusted simply by adjusting the position of the roller mount 220.

From the foregoing, it should be appreciated that coupling the seal 230 to the roller mount 220, which couples the roller 210 to the header frame 102, allows the seal 230 and the roller 210 to be simultaneously adjusted by adjusting the position of the roller mount 220. The seal 230 and the roller 210 can be held in a fixed position relative to one another by the roller mount 220, which reduces the risk of the seal 230 becoming ineffective and/or interfering with re-positioning of the roller 210 due to mispositioning of the roller 210 and/or the seal 230. Even further, initial installation of the roller 210 and the seal 230 can be simplified, and thus faster, due to the roller 210 and the seal 230 being installed together with the roller mount 220. Therefore, the draper belt assembly 200 provided according to the present disclosure reduces the amount of time that it takes to properly install and adjust both the roller 210 and the seal 230 and also reduces the risk of detrimental effects on operation due to mispositioning of either element.

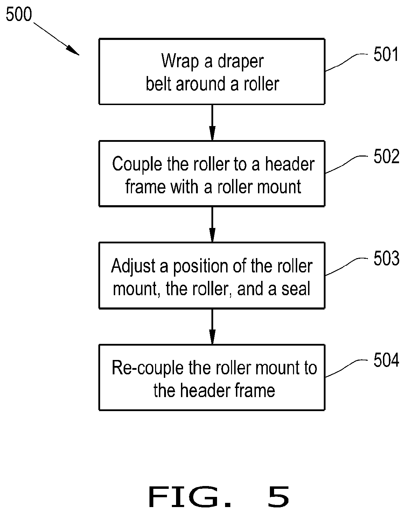

Referring now to FIG. 5, an exemplary embodiment of a method 500 of adjusting the roller 210 and the draper belt 140 of the agricultural header 100 is illustrated. The method 500 includes wrapping 501 the draper belt 140 around the roller 210 such that rotation of the roller 210 drives the draper belt 140, coupling 502 the roller 210 to the header frame 102 with the roller mount 220 having the seal 230 coupled thereto, and adjusting 503 a position of the roller mount 220 relative to the header frame 102. Adjusting 503 the position of the roller mount 220 also adjusts a corresponding position of both the roller 210 and the seal 230, as previously described. In some embodiments, the seal clearance C between the roller 210 and the seal 230 does not change during the adjusting 503. After adjusting 503 the position of the roller mount 220, which also adjusts the position of the roller 210 and the seal 230, the roller mount 220 may be re-coupled 504 to the header frame 102 so the roller 210, the roller mount 220, and the seal 230 are fixed to the header frame 102 in the adjusted positions.

## Claims

1. An agricultural header (100) for an agricultural vehicle (10), comprising:
a header frame (102);
at least one cutter (108) carried by the header frame (102) and configured to cut crop material; and
a draper belt assembly (200) carried by the header frame (102), the draper belt assembly (200) comprising:
a roller (210) supported by the header frame (102);
a draper belt (140) wrapped around the roller (210) such that rotation of the roller (210) drives the draper belt (140); and
a roller mount coupling the roller (210) to the header frame (102); **characterized in that** the draper belt assembly (200) further comprises
a seal (230) coupled to the roller mount (220) such that adjustment of the roller mount (220) causes a corresponding adjustment of both the roller (210) and the seal (230).

2. The agricultural header of claim 1, wherein the roller mount (220) comprises a roller coupling portion (221) that is coupled to the roller mount (220) and a floor plate (222) coupled to the roller coupling portion (221) and the header frame (102).

3. The agricultural header of claim 2, wherein the seal (230) is coupled to the floor plate (222).

4. The agricultural header of claim 3, wherein the seal (230) is riveted to the floor plate (222).

5. The agricultural header of claim 1, wherein the roller (210) defines an axis of rotation (AR) and the seal (230) defines a longest dimension (L) that extends in parallel with the axis of rotation (AR).

6. The agricultural header of claim 1, wherein the seal (230) defines a seal clearance relative to the roller (210) that does not change during adjustment of the roller (210) and the seal (230).

7. The agricultural header of claim 1, wherein the seal (230) comprises at least one of a polymer or rubber.

8. An agricultural vehicle (10), comprising:
a chassis (12); and
a header (100) carried by the chassis (12), the header (100) according to any of the previous claims.

9. A method (500) of adjusting a roller (210) and a draper belt (140) of an agricultural header (100) comprising a header frame (102) and at least one cutter (108) carried by the header frame (102) and configured to cut crop material, the method comprising:
(501) wrapping the draper belt (140) around the roller (210) such that rotation of the roller (210) drives the draper belt (140);
(502) coupling the roller (210) to the header frame (102) with a roller mount (220), the roller mount (220) having a seal (230) coupled thereto; and
(503) adjusting a position of the roller mount (220) relative to the header frame (102), wherein adjusting the position of the roller mount (220) also adjusts a corresponding position of both the roller (210) and the seal (230).

10. The method of claim 9, wherein the roller mount (220) comprises a roller coupling portion (221) that is coupled to the roller mount (220) and a floor plate (222) coupled to the roller coupling portion (221) and the header frame (102).

11. The method of claim 10, wherein the seal (230) is coupled to the floor plate (222).

12. The method of claim 11, wherein the seal (230) is riveted to the floor plate (222).

13. The method of claim 9, wherein the roller (210) defines an axis of rotation (AR) and the seal (230) defines a longest dimension (L) that extends in parallel with the axis of rotation (AR).

14. The method of claim 9, wherein the seal (230) defines a seal clearance relative to the roller (210) that does not change during the adjusting.

## Patentansprüche

1. Landwirtschaftlicher Vorsatz (100) für ein landwirtschaftliches Fahrzeug (10), umfassend:
einen Vorsatzrahmen (102);
mindestens eine Schneideinrichtung (108), die von dem Vorsatzrahmen (102) getragen wird und konfiguriert ist, um Erntegut zu schneiden; und
eine Förderbandanordnung (200), die von dem Vorsatzrahmen (102) getragen wird, wobei die Förderbandanordnung (200) umfasst:
eine Walze (210), die von dem Vorsatzrahmen (102) getragen wird;
ein Förderband (140), das um die Walze (210) gewickelt ist, sodass eine Drehung der Walze (210) das Förderband (140) antreibt; und
ein Walzenlager, das die Walze (210) mit dem Vorsatzrahmen (102) koppelt;
**dadurch gekennzeichnet, dass** die Förderbandanordnung (200) ferner umfasst
eine Dichtung (230), die mit dem Walzenlager (220) gekoppelt ist, sodass eine Einstellung des Walzenlagers (220) eine entsprechende Einstellung sowohl der Walze (210) als auch der Dichtung (230) bewirkt.

2. Landwirtschaftlicher Vorsatz nach Anspruch 1, wobei das Walzenlager (220) einen Walzenkopplungsabschnitt (221), der mit dem Walzenlager (220) gekoppelt ist, und eine Bodenplatte (222) umfasst, die mit dem Walzenkopplungsabschnitt (221) und dem Vorsatzrahmen (102) gekoppelt ist.

3. Landwirtschaftlicher Vorsatz nach Anspruch 2, wobei die Dichtung (230) mit der Bodenplatte (222) gekoppelt ist.

4. Landwirtschaftlicher Vorsatz nach Anspruch 3, wobei die Dichtung (230) an die Bodenplatte (222) genietet ist.

5. Landwirtschaftlicher Vorsatz nach Anspruch 1, wobei die Walze (210) eine Drehachse (AR) definiert und die Dichtung (230) eine längste Abmessung (L) definiert, die sich parallel zu der Drehachse (AR) erstreckt.

6. Landwirtschaftlicher Vorsatz nach Anspruch 1, wobei die Dichtung (230) einen Dichtungsabstand relativ zu der Walze (210) definiert, der sich während der Einstellung der Walze (210) und der Dichtung (230) nicht ändert.

7. Landwirtschaftlicher Vorsatz nach Anspruch 1, wobei die Dichtung (230) mindestens eines von einem Polymer oder Gummi umfasst.

8. Landwirtschaftliches Fahrzeug (10), umfassend:
ein Fahrgestell (12) und
einen Vorsatz (100), der von dem Fahrgestell (12) getragen wird, wobei der Vorsatz (100) einem der vorstehenden Ansprüche entspricht.

9. Verfahren (500) zum Einstellen einer Walze (210) und eines Förderbands (140) eines landwirtschaftlichen Vorsatzes (100), der einen Vorsatzrahmen (102) und mindestens eine von dem Vorsatzrahmen (102) getragene und zum Schneiden von Erntegut konfigurierte Schneideinrichtung (108) umfasst, wobei das Verfahren umfasst:
(501) Wickeln des Förderbands (140) um die Walze (210), sodass eine Drehung der Walze (210) das Förderband (140) antreibt;
(502) Koppeln der Walze (210) mit dem Vorsatzrahmen (102) mit einem Walzenlager (220), wobei an das Walzenlager (220) eine Dichtung (230) gekoppelt ist; und
(503) Einstellen einer Position des Walzenlagers (220) relativ zu dem Vorsatzrahmen (102), wobei das Einstellen der Position des Walzenlagers (220) auch eine entsprechende Position sowohl der Walze (210) als auch der Dichtung (230) einstellt.

10. Verfahren nach Anspruch 9, wobei das Walzenlager (220) einen Walzenkopplungsabschnitt (221), der mit dem Walzenlager (220) gekoppelt ist, und eine Bodenplatte (222) umfasst, die mit dem Walzenkopplungsabschnitt (221) und dem Vorsatzrahmen (102) gekoppelt ist.

11. Verfahren nach Anspruch 10, wobei die Dichtung (230) mit der Bodenplatte (222) gekoppelt ist.

12. Verfahren nach Anspruch 11, wobei die Dichtung (230) an die Bodenplatte (222) genietet ist.

13. Verfahren nach Anspruch 9, wobei die Walze (210) eine Drehachse (AR) definiert und die Dichtung (230) eine längste Abmessung (L) definiert, die sich parallel zu der Drehachse (AR) erstreckt.

14. Verfahren nach Anspruch 9, wobei die Dichtung (230) einen Dichtungsabstand relativ zu der Walze (210) definiert, der sich während der Einstellung nicht ändert.

## Revendications

1. Table de coupe agricole (100) pour un véhicule agricole (10), comprenant :
un cadre de table de coupe (102) ;
au moins un dispositif de coupe (108) porté par le cadre de table de coupe (102) et conçu pour couper du matériau de récolte ; et
un ensemble de courroie de convoyeur (200) porté par le cadre de table de coupe (102), l'ensemble de courroie de convoyeur (200) comprenant :
un rouleau (210) supporté par le cadre de table de coupe (102) ;
une courroie de convoyeur (140) enroulée autour du rouleau (210) de telle sorte qu'une rotation du rouleau (210) entraîne la courroie de convoyeur (140) ; et
un support pour rouleau accouplant le rouleau (210) au cadre de table de coupe (102) ;
**caractérisée en ce que** l'ensemble de courroie de convoyeur (200) comprend en outre
un joint (230) accouplé au support pour rouleau (220) de telle sorte que le réglage du support pour rouleau (220) entraîne un réglage correspondant à la fois du rouleau (210) et du joint (230).

2. Table de coupe agricole selon la revendication 1, dans laquelle le support de rouleau (220) comprend une partie d'accouplement de rouleau (221) qui est accouplée au support de rouleau (220) et une plaque de fond (222) accouplée à la partie d'accouplement de rouleau (221) et au cadre de table de coupe (102).

3. Table de coupe agricole selon la revendication 2, dans laquelle le joint (230) est accouplé à la plaque de fond (222).

4. Table de coupe agricole selon la revendication 3, dans laquelle le joint (230) est riveté à la plaque de fond (222).

5. Table de coupe agricole selon la revendication 1, dans laquelle le rouleau (210) définit un axe de rotation (AR) et le joint (230) définit une dimension la plus longue (L) qui s'étend parallèlement à l'axe de rotation (AR).

6. Table de coupe agricole selon la revendication 1, dans laquelle le joint (230) définit un jeu de joint par rapport au rouleau (210) qui ne change pas pendant le réglage du rouleau (210) et du joint (230).

7. Table de coupe agricole selon la revendication 1, dans laquelle le joint (230) comprend au moins un polymère ou un caoutchouc.

8. Véhicule agricole (10), comprenant :
un châssis (12) ; et
une table de coupe (100) supportée par le châssis (12), la table de coupe (100) selon l'une quelconque des revendications précédentes.

9. Procédé (500) de réglage d'un rouleau (210) et d'une courroie de convoyeur (140) d'une table de coupe agricole (100) comprenant un cadre de table de coupe (102) et au moins un dispositif de coupe (108) porté par le cadre de table de coupe (102) et conçu pour couper le matériau de récolte, le procédé comprenant :
(501) l'enroulement de la courroie de convoyeur (140) autour du rouleau (210) de telle sorte qu'une rotation du rouleau (210) entraîne la courroie de convoyeur (140) ;
(502) l'accouplement du rouleau (210) au cadre de table de coupe (102) avec un support pour rouleau (220), le support pour rouleau (220) ayant un joint (230) accouplé à celui-ci ; et
(503) le réglage d'une position du support pour rouleau (220) par rapport au cadre de table de coupe (102), dans lequel le réglage de la position du support pour rouleau (220) règle également une position correspondante à la fois du rouleau (210) et du joint (230).

10. Procédé selon la revendication 9, dans lequel le support de rouleau (220) comprend une partie d'accouplement de rouleau (221) qui est accouplée au support de rouleau (220) et une plaque de fond (222) accouplée à la partie d'accouplement de rouleau (221) et au cadre de table de coupe (102).

11. Procédé selon la revendication 10, dans lequel le joint (230) est accouplé à la plaque de fond (222).

12. Procédé selon la revendication 11, dans lequel le joint (230) est riveté à la plaque de fond (222).

13. Procédé selon la revendication 9, dans lequel le rouleau (210) définit un axe de rotation (AR) et le joint (230) définit une dimension la plus longue (L) qui s'étend parallèlement à l'axe de rotation (AR).

14. Procédé selon la revendication 9, dans lequel le joint (230) définit un jeu de joint par rapport au rouleau (210) qui ne change pas pendant l'ajustement.
